# EUROPEAN PATENT SPECIFICATION

(11) **EP 3 811 036 B1**
(45) Date of publication and mention of the grant of the patent: **21.05.2025**
(21) Application number: 19743041.6
(22) Date of filing: 06.06.2019
(51) Int. Cl.: G01F 1/68, G01F 15/02, G01F 5/00

(54) **PRESSURE-INSENSITIVE THERMAL TYPE FLOW METER**
DRUCKUNEMPFINDLICHER THERMISCHER DURCHFLUSSMESSER
DÉBITMÈTRE THERMIQUE INSENSIBLE À LA PRESSION

(30) Priority: 08.06.2018 NL 2021082
(43) Date of publication of application: 28.04.2021
(73) Proprietor: Berkin B.V., 7261 AK Ruurlo (NL)
(72) Inventor: HAGELSTEIN, Rob, 7261 AK Ruurlo (NL); HEIJNEN, Goijert Lambertus, 7261 AK Ruurlo (NL); BOS, Jeroen Wouter, 7261 AK Ruurlo (NL); VON KANN, Stefan, 7261 AK Ruurlo (NL)
(74) Representative: Algemeen Octrooi- en Merkenbureau B.V.
(86) International application number: PCT/NL2019/050340
(87) International publication number: WO 2019/235928

(56) References cited:
- EP-A1- 2 703 786
- US-A1- 2005 034 532
- US-A1- 2008 140 260
- US-A1- 2017 115 150

## Description

The invention relates to a thermal type flow meter, comprising a flow tube for a medium whose flow is to be determined, a sensor tube, having an inlet fluidly connected to the flow tube at a first position and an outlet fluidly connected to the flow tube at a second, downstream position, wherein the sensor tube comprises a thermal flow sensor for measuring a temperature differential in the sensor tube in order to determine the flow.

Such thermal type flow meters are known from for example EP 1.867.962. In general, thermal flow sensors are furthermore known from JP-S56 73317 A and WO 2012/057886. Thermal flow meters comprising flow sensors with a sensor tube having a capillary tube make use of the fact that heat transfer from the tube wall to a fluid (gas or liquid) that flows in the tube is a function of the mass flow rate, the difference between the fluid temperature and the wall temperature and the specific heat capacity of the fluid. In mass flow controllers a large variety of flow sensor configurations can be used.

The invention in particular relates to a thermal type flow meter further comprising:
- a pressure sensor provided at or near the flow tube, wherein the pressure sensor is fluidly connected to e.g. an entrance of the flow tube, or generally at a position upstream of a sensor tube inlet, to measure the pressure of the flow of the medium through the flow tube, and
- a temperature sensor provided at the flow tube to measure the temperature of the flow of the medium through the flow tube.

It is generally known that standard thermal mass flow meters (MFM) or mass flow controllers (MFC) are sensitive to changes or fluctuations in pressure and/or temperature. These instruments are calibrated for specified operating conditions (pressure and temperature). When the operating conditions change, the conversion factors have to be modified. These new conversion factors are normally calculated off-line and loaded into the MFM or MFC.

Currently available, pressure-insensitive MFM/MFC's measure the pressure and temperature and determine the correction factors by using look-up-tables or polynomial fits of medium properties.

US 2017/0115150 A1 for instance discloses a capillary heating type thermal type mass flow meter comprising a sensor configured to detect temperature and pressure of a fluid and a correction means configured to correct a mass flow rate based on said temperature and said pressure, change rates of the mass flow rate of the fluid with respect to temperature and pressure have been previously acquired, and the mass flow rate is corrected based on said temperature and said pressure as well as these change rates.

A problem that occurs with the above measuring methods and systems is that inaccuracies in the measuring signal are still relatively prevalent, the above methods for correcting the signal obtained from the thermal flow sensor are relatively cumbersome. As mentioned above, US 2017/0115150 A1 utilizes previously acquired change rate data to correct the mass flow rate. More specifically, as disclosed in paragraph [0068] of US 2017/0115150 A1, a mass flow rate of a fluid of a different kind from a reference fluid is measured. In order to calculate a mass flow rate of a fluid which has different thermal physical properties (for example, heat capacity, et cetera) from those of a reference fluid with a thermal mass flow meter, an actually measured mass flow rate is corrected according to the thermal physical properties of the fluid. Therein, a mass flow rate is corrected with a conversion factor (CF) which is an intrinsic correction coefficient previously acquired for different kinds of fluid.

Accordingly, it is an object of the invention to provide a thermal type flow meter as described above and a measuring/correction method wherein inaccuracies in the measuring signal are further minimized, and correcting the signal obtained from the thermal flow sensor is made less cumbersome.

The flow meter according to the present invention thereto is characterized by
- a processing unit for determination of the actual medium properties, comprising actual density, viscosity, heat capacity, thermal conductivity and/or vapour pressure, based on the pressure measured by the pressure sensor, the temperature measured by the temperature sensor and intrinsic medium data, retrieved from a database, comprising molecular mass, dipole momentum, and/or boiling point, wherein the intrinsic medium data is determined from the type of medium or medium mix, and the instrument settings, and
- a processing unit for determination of the flow by continuously and in real-time calculating the actual flow through of the thermal flow sensor with the actual medium properties and calibration data, and
- the pressure sensor and the temperature sensor being configured to respectively measure the pressure and the temperature of the flow of the medium through the flow tube continuously and in real-time.

Thus, pressure, temperature and flow signal can be measured real-time and/or continuously and are then transported to the processing unit, which utilizes known algorithms to calculate for instance actual density, viscosity, heat capacity and thermal conductivity, and from that the actual (i.e. corrected/compensated) gas flow.

The temperature difference (ΔT) measured by the thermal flow sensor and the actual medium properties are used to calculate (real-time and/or continuously) the real mass flow, with improved independence from the pressure and temperature.

The above flow meter provides much more accurate flow determination results, due to the flow meter no longer having to rely on correction factors contained in look-up tables or calculated by using polynomial fits, and, furthermore, a flow meter's user no longer has to reload conversion factors into the flow meter, making the flow meter much easier to use. The above flow meter effectively prevents the occurrence of pressure variations (such as occurring with known systems, such as mechanical clocks or gas bottles) and the consequent measurement error, leading to the above thermal type flow meter being effectively pressure-insensitive. In addition, the above thermal type flow meter allows to limit the system when gasses or fluids move towards the vapor pressure line. Furthermore, the above thermal type flow meter allows to calculate valve capacity by using the actual pressure.

Thus, the flow meter according to the invention does not have to use a previously determined correction factor to calculate the mass flow rate, as opposed to the flow meter disclosed in US 2017/0115150 A1. The flow meter according to the present invention continuously measures intrinsic medium data and therefore does not have to use previously stored data. Furthermore, the flow meter according to the present invention preferably measures intrinsic medium data in real time.

Advantageous embodiments form the subject matter of the dependent claims. A few of these embodiments will be explained in more detail hereinafter. The medium may, of course, comprise a fluid, a gas or a liquid.

In an embodiment of the flow meter, the pressure sensor and the temperature sensor are provided at the flow tube downstream of the first position and upstream of the second position.

Another aspect of the invention relates to a method for determining a flow of a medium by using a thermal type flow meter, comprising the steps of:
- flowing a medium through a flow tube of the thermal type flow meter,
- flowing the medium through a sensor tube, having an inlet fluidly connected to the flow tube at a first position and an outlet fluidly connected to the flow tube at a second, downstream position,
- measuring a temperature differential in the sensor tube using a thermal flow sensor comprised by the sensor tube in order to determine the flow, preferably continuously,
- measuring the pressure of the flow of the medium through the flow tube by using a pressure sensor provided at or near the flow tube, preferably continuously,
- measuring the temperature of the flow of the medium through the flow tube by using a temperature sensor provided at the flow tube, preferably continuously, characterized by
- determining the actual medium properties, comprising actual density, viscosity, heat capacity, thermal conductivity and/or vapour pressure, based on the pressure measured by the pressure sensor, the temperature measured by the temperature sensor and intrinsic medium data retrieved from a database, comprising molecular mass, dipole momentum, and/or boiling point, wherein the intrinsic medium data is determined from the type of medium, instrument settings and/or medium mix,
- determining the flow by continuously and in real-time calculating the actual flow through the thermal flow sensor with the actual medium properties and calibration data, and
- measuring the pressure and the temperature of the flow of the medium through the flow tube continuously and in real-time.

As stated in the foregoing, the flow meter according to the present invention measures intrinsic medium data continuously and/or in real time and therefore does not have to use previously stored data.

Preferably, as stated before, the intrinsic medium data comprises molecular mass, critical properties, dipole momentum, and/or boiling point.

The invention will now be explained in more detail with reference to a few preferred embodiments shown in the appended figures.
Figure 1 schematically shows an exemplary embodiment of a thermal type flow meter according to the invention; and
Figure 2 shows an exemplary embodiment of the method according to the present invention.

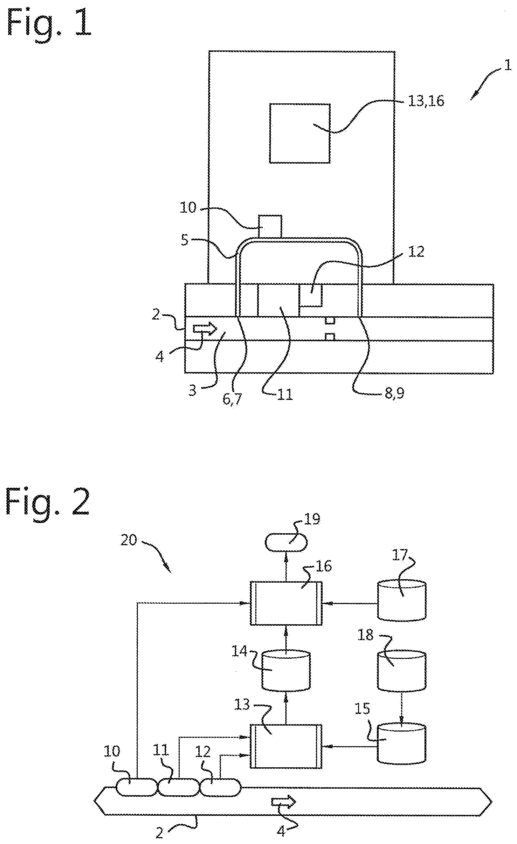

Figure 1 shows a thermal type flow meter 1, comprising a flow tube 2 for a medium 3 whose flow 4 is to be determined. A sensor tube 5 is shown, having an inlet 6 fluidly connected to the flow tube 2 at a first position 7 and an outlet 8 fluidly connected to the flow tube 2 at a second, downstream position 9. The sensor tube 5 comprises a thermal flow sensor 10 for measuring a temperature differential in the sensor tube 5 in order to determine the flow 4. A pressure sensor 11 is provided at or near the flow tube 2 to measure the pressure of the flow 4 of the medium 3 through the flow tube 2. The pressure sensor 11 can be provided near the flow tube 2, wherein the pressure sensor 11 is fluidly connected to the flow tube 2 via a pressure sensing channel (not shown). Preferably, the pressure sensor 11 is arranged for measuring pressure at a position upstream of the sensor tube inlet 6, such as at an entrance of the flow tube 2. Additionally, a temperature sensor 12 is provided at the flow tube 2 to measure the temperature of the flow 4 of the medium 3 through the flow tube 2. The pressure sensor 11 can, of course, also be arranged to measure pressure at other flow tube 2 positions, such as at a position downstream of the sensor tube outlet 8. It is also conceivable that multiple pressure sensors 11 are used for pressure measurements, such as one, two, three or even more. A processing unit 13 is indicated for determination of the actual medium 3 properties 14 based on the pressure measured by the pressure sensor 11, the temperature measured by the temperature sensor 12 and intrinsic medium data 15 (as shown in Figure 2). A processing unit 16 is also shown for determination of the flow 4 continuously calculating the actual flow through of the thermal flow sensor 10 with the actual medium 3 properties and calibration data 17 (as shown in Figure 2). Of course, the processing units 13, 16 may be embodied by a single processing unit or CPU. Preferably, the sensor tube 5 and/or the processing units 13, 16 are arranged on a (preferably single) Printed Circuit Board (PCB) comprised by the thermal type flow meter 1. The pressure sensor 11 and temperature sensor 12 are preferably arranged on or attached to the flow tube 2 (preferably not on the PCB).

The intrinsic medium data 15 are retrieved from a database, such as the normalized fluid database available as part of the Applicant's FLUIDAT^{®} software package. This database comprises 800 fluids, mainly comprising hydrocarbons, complemented with most well-known inorganic fluids, such as air, argon and helium. Essentially, a three-step process is used therein: the identity or type of fluid (i.e. gas, liquid or plasma) is provided as input and combined with sensor data regarding pressure (obtained by means of the pressure sensor 11) and temperature (obtained by means of the temperature sensor 12). This information is then provided as input to a normalized database, such as Applicant's FLUIDAT^{®} database, and more accurate numbers are then calculated for, among others, thermal conductivity, heat capacity, density and viscosity. The previously calculated numbers for thermal conductivity, heat capacity, density and viscosity and the unfiltered signal of the thermal flow sensor 10 are then converted to mass flow rate.

A specific type of construction of the flow meter 1 for example includes the use of a stainless steel sensor tube 5 with two or more resistance elements (not shown) which are in thermally conductive contact with the sensor tube 5. The resistance elements are typically made of a material having a high resistance temperature coefficient. Each of the elements can function as a heater, as a temperature detector, or as both. At least one resistance element (the heater) is energised with electrical current for supplying heat to the sensor tube 5. When two heaters with a constant power are energised, the mass flow rate of the fluid through the sensor tube 5 can be derived from the temperature difference between the resistance elements. This temperature difference is then sensed by a thermal flow sensor 10 to determine the flow.

In another method, a first resistance element at a first position functions as a heater and as a temperature detector, and a second resistance element disposed at a second position, upstream of the first position, functions as a temperature detector.

The actual medium 3 properties comprise actual density, viscosity, heat capacity, thermal conductivity and/or vapour pressure. The intrinsic medium data 15 is determined from the type of medium/fluid, instrument settings and/or medium/fluid mix 18.

In an advantageous configuration, the pressure sensor 11 and the temperature sensor 12 are provided at the flow tube 2 downstream of the first position 7 and upstream of the second position 9.

The intrinsic medium data 15 as shown comprises molecular mass, critical properties, dipole momentum, boiling point, et cetera.

Figure 2 schematically shows a method 20 for determining a flow 4 of a medium 3 by using a thermal type flow meter 1, such as described above. The medium 3 is flowed through a flow tube 2 of the thermal type flow meter 1. The medium 3 is also flowed through a sensor tube 5, having an inlet 6 fluidly connected to the flow tube 2 at a first position 7 and an outlet 8 fluidly connected to the flow tube 2 at a second, downstream position 9. A temperature differential is measured in the sensor tube 5 using a thermal flow sensor 10 comprised by the sensor tube 5 in order to determine the flow 4. The pressure of the flow 4 of the medium 3 through the flow tube 2 is measured by using a pressure sensor 11 provided at or near the flow tube 2. In addition, the temperature of the flow 4 of the medium 3 through the flow tube 2 is measured by using a temperature sensor 12 provided at the flow tube 2. The actual medium properties 14 are determined based on the pressure measured by the pressure sensor 11, the temperature measured by the temperature sensor 12 and intrinsic medium data 15. The flow 4 is determined by continuously calculating the actual flow through the thermal flow sensor 10 with the actual medium 3 properties 14 and calibration data 17.

As stated before, the actual medium 3 properties 14 comprise actual density, viscosity, heat capacity, thermal conductivity and/or vapour pressure. The intrinsic medium data 15 is determined from the type of medium/fluid, instrument settings and/or medium/fluid mix 18. The intrinsic medium data 15 comprise molecular mass, critical properties, dipole momentum, and/or boiling point.

In practice, the Applicant has perceived an increase in measuring accuracy using the above thermal flow meter and method associated therewith, using the FLUIDAT^{®} software. The accuracy, however, relates to the method used in combination with the actual temperature and pressure, and the type of fluid to be calculated. Most of the methods in FLUIDAT ^{®} are optimized for certain classes of fluids and certain ranges of pressure and/or temperature. Therefore, it is hard to give one general value for the accuracy of the FLUIDAT^{®} calculation results.

A classification of the accuracy of some physical properties:
- Heat capacity typical < 2%, often better than 0.5%,
- Density typical < 1%, often better than 0.1%,
- Thermal conductivity typical < 5%, often better than 2%,
- Viscosity typical < 5%, often better than 2%, and
- Vapor pressure typical < 2%, in some areas the error is larger.

The skilled person will appreciate that in the foregoing the invention has been described with reference to a few preferred embodiments. The invention is not limited to these embodiments, however. The scope of the protection is determined by the appended claims.

### LIST OF REFERENCE NUMERALS

1. Thermal type flow meter
2. Flow tube
3. Medium
4. Flow
5. Sensor tube
6. Sensor tube inlet
7. First position
8. Sensor tube outlet
9. Second position
10. Thermal flow sensor
11. Pressure sensor provided at flow tube
12. Temperature sensor provided at flow tube
13. Processing unit for determination of actual medium properties
14. Actual medium properties
15. Intrinsic medium data
16. Processing unit for determination of the flow
17. Calibration data
18. Data concerning type of fluid, instrument settings and/or fluid mix
19. Determined flow
20. Method for determining a flow

## Claims

1. A thermal type flow meter (1), comprising:
- a flow tube (2) for a medium (3) whose flow (4) is to be determined,
- a sensor tube (5), having an inlet (6) fluidly connected to the flow tube at a first position (7) and an outlet (8) fluidly connected to the flow tube at a second, downstream position (9), wherein the sensor tube comprises a thermal flow sensor (10) for measuring a temperature differential in the sensor tube in order to determine the flow,
- a pressure sensor (11) provided at or near the flow tube to measure the pressure of the flow of the medium through the flow tube,
- a temperature sensor (12) provided at the flow tube to measure the temperature of the flow of the medium through the flow tube, **characterized by**
- a processing unit (13) for determination of the actual medium properties (14), comprising actual density, viscosity, heat capacity, thermal conductivity and/or vapour pressure, based on the pressure measured by the pressure sensor, the temperature measured by the temperature sensor and intrinsic medium data (15) retrieved from a database, comprising molecular mass, dipole momentum, and/or boiling point, wherein the intrinsic medium data is determined from the type of medium, instrument settings and/or medium mix (18),
- a processing unit (16) for determination of the flow by continuously and in real-time calculating the actual flow through the thermal flow sensor using the actual medium properties and calibration data (17), and
- the pressure sensor (11) and the temperature sensor (12) being configured to respectively measure the pressure and the temperature of the flow of the medium through the flow tube continuously and in real-time.

2. A flow meter according claim 1, wherein the pressure sensor and the temperature sensor are provided at the flow tube downstream of the first position and upstream of the second position.

3. A flow meter according to any one of the preceding claims, wherein the intrinsic medium data comprises critical properties.

4. Method (20) for determining a flow (4) of a medium (3) by using a thermal type flow meter (1), comprising the steps of:
- flowing the medium through a flow tube (2) of the thermal type flow meter,
- flowing the medium through a sensor tube (5), having an inlet (6) fluidly connected to the flow tube at a first position (7) and an outlet (8) fluidly connected to the flow tube at a second, downstream position (9),
- measuring a temperature differential in the sensor tube using a thermal flow sensor (10) comprised by the sensor tube in order to determine the flow,
- measuring the pressure of the flow of the medium through the flow tube by using a pressure sensor (11) provided at or near the flow tube,
- measuring the temperature of the flow of the medium through the flow tube by using a temperature sensor (12) provided at the flow tube, **characterized by**
- determining the actual medium properties (14), comprising actual density, viscosity, heat capacity, thermal conductivity and/or vapour pressure, based on the pressure measured by the pressure sensor, the temperature measured by the temperature sensor and intrinsic medium data (15) retrieved from a database, comprising molecular mass, dipole momentum, and/or boiling point, wherein the intrinsic medium data is determined from the type of medium, instrument settings and/or medium mix (18),
- determining the flow by continuously and in real-time calculating the actual flow through the thermal flow sensor using the actual medium properties and calibration data (17), and
- measuring the pressure and the temperature of the flow of the medium through the flow tube continuously and in real-time.

5. A method according to any claim 4, wherein the intrinsic medium data comprises critical properties.

## Patentansprüche

1. Thermischer Durchflussmesser (1), umfassend:
- ein Strömungsrohr (2) für ein Medium (3), dessen Durchfluss (4) bestimmt werden soll,
- ein Sensorrohr (5), das einen Einlass (6), der an einer ersten Position (7) mit dem Strömungsrohr fluidverbunden ist, und einen Auslass (8), der an einer zweiten, stromabwärtigen Position (9) mit dem Strömungsrohr fluidverbunden ist, aufweist, wobei das Sensorrohr einen thermischen Durchflusssensor (10) zum Messen einer Temperaturdifferenz in dem Sensorrohr umfasst, um den Durchfluss zu bestimmen,
- einen Drucksensor (11), der am oder in der Nähe des Strömungsrohrs vorgesehen ist, um den Druck des Durchflusses des Mediums durch das Strömungsrohr zu messen;
- einen Temperatursensor (12), der an dem Strömungsrohr vorgesehen ist, um die Temperatur des Durchflusses des Mediums durch das Strömungsrohr zu messen, **gekennzeichnet durch**
- eine Verarbeitungseinheit (13) zur Bestimmung der tatsächlichen Mediumeigenschaften (14), umfassend ist-Dichte, Viskosität, Wärmekapazität, Wärmeleitfähigkeit und/oder Dampfdruck, basierend auf dem durch den Drucksensor gemessenen Druck, der durch den Temperatursensor gemessenen Temperatur und aus einer Datenbank abgerufenen Daten des intrinsischen Mediums (15), umfassend Molekülmasse, Dipolmoment und/oder Siedepunkt, wobei die Daten des intrinsischen Mediums aus der Art des Mediums oder den Geräteeinstellungen und/oder dem Mediengemisch (18) bestimmt werden,
- eine Verarbeitungseinheit (16) zur Bestimmung des Durchflusses durch kontinuierliche und echtzeitliche Berechnung des tatsächlichen Durchflusses durch den thermischen Durchflusssensor unter Verwendung der tatsächlichen Mediumeigenschaften und Kalibrierungsdaten (17), und
- wobei der Drucksensor (11) und der Temperatursensor (12) dazu ausgelegt sind, den Druck bzw. die Temperatur des Durchflusses des Mediums durch das Strömungsrohr kontinuierlich und in Echtzeit zu messen.

2. Durchflussmesser nach Anspruch 1, wobei der Drucksensor und der Temperatursensor an dem Strömungsrohr stromabwärts der ersten Position und stromaufwärts der zweiten Position vorgesehen sind.

3. Durchflussmesser nach einem der vorhergehenden Ansprüche, wobei die Daten des intrinsischen Mediums kritische Eigenschaften umfassen.

4. Verfahren (20) zum Bestimmen eines Durchflusses (4) eines Mediums (3) unter Verwendung eines thermischen Durchflussmessers (1), umfassend die Schritte:
- Strömen des Mediums durch ein Strömungsrohr (2) des thermischen Durchflussmessers,
- Strömen des Mediums durch ein Sensorrohr (5) mit einem Einlass (6), der an einer ersten Position (7) mit dem Strömungsrohr fluidverbunden ist, und einem Auslass (8), der an einer zweiten, stromabwärtigen Position (9) mit dem Strömungsrohr fluidverbunden ist,
- Messen einer Temperaturdifferenz in dem Sensorrohr mit einem thermischen Durchflusssensor (10), der aus dem Sensorrohr besteht, um den Durchfluss zu bestimmen;
- Messen des Drucks des Durchflusses des Mediums durch das Strömungsrohr unter Verwendung eines Drucksensors (11), der am oder in der Nähe des Strömungsrohrs vorgesehen ist;
- Messen der Temperatur des Durchflusses des Mediums durch das Strömungsrohr unter Verwendung eines Temperatursensors (12), der an dem Strömungsrohr vorgesehen ist, **gekennzeichnet durch**
- Bestimmen der tatsächlichen Mediumeigenschaften (14), umfassend Ist-Dichte, Viskosität, Wärmekapazität, Wärmeleitfähigkeit und/oder Dampfdruck, basierend auf dem durch den Drucksensor gemessenen Druck, der durch den Temperatursensor gemessenen Temperatur und aus einer Datenbank abgerufenen Daten des intrinsischen Mediums (15), umfassend Molekülmasse, Dipolmoment und/oder Siedepunkt, wobei die Daten des intrinsischen Mediums aus der Art des Mediums, den Geräteeinstellungen und/oder dem Mediengemisch (18) bestimmt werden,
- Bestimmen des Durchflusses durch kontinuierliche und echtzeitliche Berechnung des tatsächlichen Durchflusses durch den thermischen Durchflusssensor unter Verwendung der tatsächlichen Mediumeigenschaften und Kalibrierungsdaten (17), und
- Messen des Drucks und der Temperatur des Durchflusses des Mediums durch das Strömungsrohr kontinuierlich und in Echtzeit.

5. Verfahren nach Anspruch 4, wobei die Daten des intrinsischen Mediums kritische Eigenschaften umfassen.

## Revendications

1. Débitmètre de type thermique (1), comprenant :
- un tube d'écoulement (2) pour un milieu (3) dont le débit (4) doit être déterminé,
- un tube de capteur (5), ayant une entrée (6) reliée de manière fluidique au tube d'écoulement à une première position (7) et une sortie (8) reliée de manière fluidique au tube d'écoulement à une seconde position aval (9), où le tube de capteur comprend un capteur de débit thermique (10) pour mesurer un différentiel de température dans le tube de capteur afin de déterminer le débit,
- un capteur de pression (11) prévu au niveau ou à proximité du tube d'écoulement pour mesurer la pression de l'écoulement du milieu à travers le tube d'écoulement,
- un capteur de température (12) prévu au niveau du tube d'écoulement pour mesurer la température de l'écoulement du milieu à travers le tube d'écoulement, **caractérisé par**
- une unité de traitement (13) pour déterminer les propriétés réelles de milieu (14), comprenant la densité, la viscosité, la capacité thermique, la conductivité thermique et/ou la pression de vapeur réelle(s), sur la base de la pression mesurée par le capteur de pression, de la température mesurée par le capteur de température et des données intrinsèques de milieu (15) extraites d'une base de données, comprenant la masse moléculaire, le moment dipolaire et/ou le point d'ébullition, où les données intrinsèques de milieu sont déterminées à partir du type de milieu, des paramètres d'instrument et/ou du mélange de milieux (18),
- une unité de traitement (16) pour déterminer le débit en calculant en continu et en temps réel le débit réel à travers le capteur de débit thermique en utilisant les propriétés réelles de milieu et les données d'étalonnage (17), et
- le capteur de pression (11) et le capteur de température (12) étant configurés pour mesurer respectivement la pression et la température de l'écoulement du milieu à travers le tube d'écoulement en continu et en temps réel.

2. Débitmètre selon la revendication 1, dans lequel le capteur de pression et le capteur de température sont prévus au niveau du tube d'écoulement en aval de la première position et en amont de la seconde position.

3. Débitmètre selon l'une quelconque des revendications précédentes, dans lequel les données intrinsèques de milieu comprennent des propriétés critiques.

4. Procédé (20) de détermination de débit (4) d'un milieu (3) en utilisant un débitmètre de type thermique (1), comprenant les étapes :
- d'écoulement du milieu à travers un tube d'écoulement (2) du débitmètre de type thermique,
- d'écoulement du milieu à travers un tube de capteur (5), ayant une entrée (6) reliée de manière fluidique au tube d'écoulement à une première position (7) et une sortie (8) reliée de manière fluidique au tube d'écoulement à une seconde position aval (9),
- de mesure d'un différentiel de température dans le tube de capteur en utilisant un capteur de débit thermique (10) compris dans le tube de capteur afin de déterminer le débit,
- de mesure de la pression de l'écoulement du milieu à travers le tube d'écoulement en utilisant un capteur de pression (11) prévu au niveau ou à proximité du tube d'écoulement,
- de mesure de la température de l'écoulement du milieu à travers le tube d'écoulement en utilisant un capteur de température (12) prévu au niveau du tube d'écoulement, **caractérisé par**
- la détermination des propriétés réelles de milieu (14), comprenant la densité, la viscosité, la capacité thermique, la conductivité thermique et/ou la pression de vapeur réelle(s), sur la base de la pression mesurée par le capteur de pression, de la température mesurée par le capteur de température et des données intrinsèques de milieu (15) extraites d'une base de données, comprenant la masse moléculaire, le moment dipolaire et/ou le point d'ébullition, où les données intrinsèques de milieu sont déterminées à partir du type de milieu, des paramètres d'instrument et/ou du mélange de milieux (18),
- la détermination du débit en calculant en continu et en temps réel le débit réel à travers le capteur de débit thermique en utilisant les propriétés réelles de milieu et les données d'étalonnage (17), et
- la mesure de la pression et de la température de l'écoulement du milieu à travers le tube d'écoulement en continu et en temps réel.

5. Procédé selon la revendication 4, dans lequel les données intrinsèques de milieu comprennent des propriétés critiques.
